Europäisches Patentamt

European Patent Office

Office européen des brevets

(11) Veröffentlichungsnummer: **0 442 148 A1**

## (12) EUROPÄISCHE PATENTANMELDUNG

(21) Anmeldenummer: 90125736.0

(22) Anmeldetag: 28.12.90

(51) Int. Cl.⁵: **B62D 7/02**, B62D 5/14

(30) Priorität: 15.02.90 DE 4004753

(43) Veröffentlichungstag der Anmeldung:
**21.08.91 Patentblatt 91/34**

(84) Benannte Vertragsstaaten:
**AT BE DE FR GB IT NL SE**

(71) Anmelder: **Steinbock GmbH**
**Steinbockstrasse 38-40**
**W-8052 Moosburg/Isar(DE)**

(72) Erfinder: **Eilenlehner, Eduard, Dipl.-Ing. (FH)**
**Isarstrasse 1b**
**W-8052 Moosburg(DE)**

(74) Vertreter: **Weickmann, Heinrich, Dipl.-Ing. et**
**al**
**Patentanwälte H. Weickmann, Dr. K. Fincke**
**F.A. Weickmann, B. Huber Dr. H. Liska, Dr. J.**
**Prechtel Möhlstrasse 22 Postfach 860 820**
**W-8000 München 86(DE)**

(54) **Drehschemellenkanordnung.**

(57) Die Erfindung betrifft eine Drehschemellenkanordnung an einem Fahrzeug, insbesondere an einem Dreiradstapler (10), das ein an einer Fahrgestellplatte (20) schwenkbar gelagerten Drehschemelzapfen (22) und einen an dem Drehschemelzapfen (22) angreifenden hydraulischen Lenkantrieb (26) aufweist. Der Lenkantrieb (26) ist dabei durch einen konzentrisch zu dem Drehschemelzapfen (22) angeordneten Drehkolbenantrieb (26) mit einem fahrgestellfesten Stator (36) und einem auf den Drehschemelzapfen (22) drehfest angeordneten Rotor (28) gebildet.

**Fig. 3**

# DREHSCHEMELLENKANORDUNG

Die Erfindung betrifft eine Drehschemellenkanordnung an einem Fahrzeug, insbesondere an einem Dreiradstapler mit einem an einem Fahrgestell schwenkbar gelagerten Drehschemelzapfen und einem an dem Drehschemelzapfen angreifenden hydraulischen Lenkantrieb.

Aus der DE-PS 24 06 610 geht eine Drehschemellenanordnung für einen Dreiradstapler der eingangs genannten Art hervor, bei der der hydraulische Lenkantrieb einen in dem Lagergehäuse des Drehschemelzapfens angeordneten, tangential zu dem Drehschemelzapfen verschiebbaren Doppelkolben aufweist. Dieser Doppelkolben ist in seinem mittleren Abschnitt als Zahnstange ausgebildet und kämmt mit einem drehfest auf dem Drehschemelzapfen angebrachten Zahnrad. Damit bei der Betätigung des Doppelkolbens infolge einer Beaufschlagung der jeweiligen Kolbenfläche mit Druckfluid ein ausreichend großer Lenkausschlag ermöglicht wird, muß für den Doppelkolben ein entsprechend großer Verschiebeweg vorgesehen werden. Hierzu ist das an sich zylindrische Lagergehäuse des Drehschemelzapfens mit zwei diametral gegenüberstehenden, horizontal verlaufenden Fortsätzen versehen, welche die dem jeweiligen Hub des Kolbens entsprechenden Zylinderräume aufnehmen. Hierdurch besitzt das Gehäuse nicht nur eine verhältnismäßig komplizierte Gestalt, sondern es muß auch ein entsprechend großer Bauraum in dem Dreiradstapler vorgesehen werden. Darüber hinaus ist die vorbekannte Drehschemellenanordnung verschleißanfällig, da zum einen die relativ hohen Lenkkräfte immer nur über jeweils eine Zahnpaarung übertragen werden. Dabei treten an den Zahnflanken der sich aufeinander abwälzenden Zähne hohe Belastungen auf, so daß diese Flanken im Laufe der Zeit relativ hohem Abrieb unterworfen sind. Hiervon ist insbesondere diejenige Zahnpaarung betroffen, die sich bei Geradeausfahrt in Eingriff befindet, da es sich hierbei um die am häufigsten auftretende Lenkeinstellung handelt. Schließlich ist das Herstellungsverfahren einer Zahnstange bzw. eines Zahnrades relativ aufwendig, insbesondere wenn die Zahnflanken Evolventen bilden, so daß die Fertigung der bekannten Drehschemellenkanordnung mit hohen Kosten verbunden ist.

Der Erfindung liegt die Aufgabe zugrunde, eine Drehschemellenkanordnung der eingangs genannten Art zu schaffen, die bei hoher Verschleißfestigkeit kompakt baut.

Vorstehende Aufgabe wird dadurch gelöst, daß konzentrisch zu dem Drehschemelzapfen ein Drehkolbenantrieb angeordnet ist mit einem fahrgestellfesten Stator und einem auf dem Drehschemelzapfen drehfest angeordneten Rotor.

Durch die konzentrische Anordnung des Drehkolbenantriebs wird eine insgesamt kompakte Bauweise der Drehschemellenkanordnung erzielt. Darüber hinaus wird durch die Verwendung des Drehkolbenantriebs der Verschleiß innerhalb der Drehschemellenkanordnung auf ein Minimum reduziert, da kein Abwälzeingriff vorliegt. Schließlich läßt sich eine derartige Drehschemellenkanordnung einfach fertigen, so daß die hierbei entstehenden Kosten gering sind. Der Rotor kann dabei durch einen auf dem Drehschemelzapfen angeordneten Segmentkolben gebildet sein, welcher in einem fahrgestellfesten, den Stator bildenden Ringzylinderraum aufgenommen ist. Hierdurch wird der Aufbau der Drehschemellenkanordnung und damit das Herstellungsverfahren weiter vereinfacht.

Der Segmentkolben kann unmittelbar an dem Drehschemelzapfen angeordnet sein. Es besteht aber ebenso die Möglichkeit, daß der Ringzylinderraum nach radial innen durch eine Drehbuchse abgeschlossen ist, welche dichtend an einem den Ringzylinderraum in axialer Richtung und nach radial außen begrenzenden Gehäuse anliegt, mit dem Drehschemelzapfen drehfest verbunden ist und mit dem Segmentkolben in Mitnahmeverbindung steht. Durch die Verwendung der Drehbuchse wird eine über den Querschnitt des Drehschemelzapfens gleichmäßige Beanspruchung bei der Übertragung der Lenkkräfte von dem Segmentkolben auf den Zapfen erzielt und dabei gleichzeitig eine gute Abdichtung sichergestellt.

Das Gehäuse kann dabei durch eine auf einer Fahrgestellplatte mit Durchtrittsöffnung für den Drehschemelzapfen auflagernden Bodenplatte, einem Mantel und einem Deckelteil gebildet sein, welche mit der Fahrgestellplatte verspannt sind. Hierdurch werden die während der Fahrt auftretenden Reaktionskräfte von dem Gehäuse unmittelbar in den Rahmen des Fahrgestells geführt.

Um für die hydraulische Betätigung des Segmentkolbens einen möglichst einfachen Aufbau zu ermöglichen, nimmt der Ringzylinderraum vorzugsweise ein einziges statorfestes Segment auf, welches zusammen mit dem Segmentkolben zwei Teilringzylinderräume begrenzt, die jeweils mit mindestens einem Hydraulikanschluß versehen sind.

Die kompakte Bauweise der Drehschemellenkanordnung kann dadurch gesteigert werden, daß der Drehschemelzapfen durch ein erstes Lager in dem Fahrgestell, insbesondere der Fahrgestellplatte, unterhalb des Stators und durch ein oberes, im Stator aufgenommenes zweites Lager gelagert ist. Dabei kann das zweite Lager im Deckelteil angeordnet sein.

Weitere vorteilhafte Ausgestaltungen der Erfindung sowie ein Ausführungsbeispiel werden an Hand der Zeichnung nachstehend näher erläutert. Es zeigt:

Fig. 1     eine erfindungsgemäße Drehschemellenkanordnung an einem Dreiradstapler;

Fig. 2     einen Schnitt entlang der Linie II-II in Fig. 3; und

Fig. 3     einen Schnitt entlang der Linie III-III in Fig. 2.

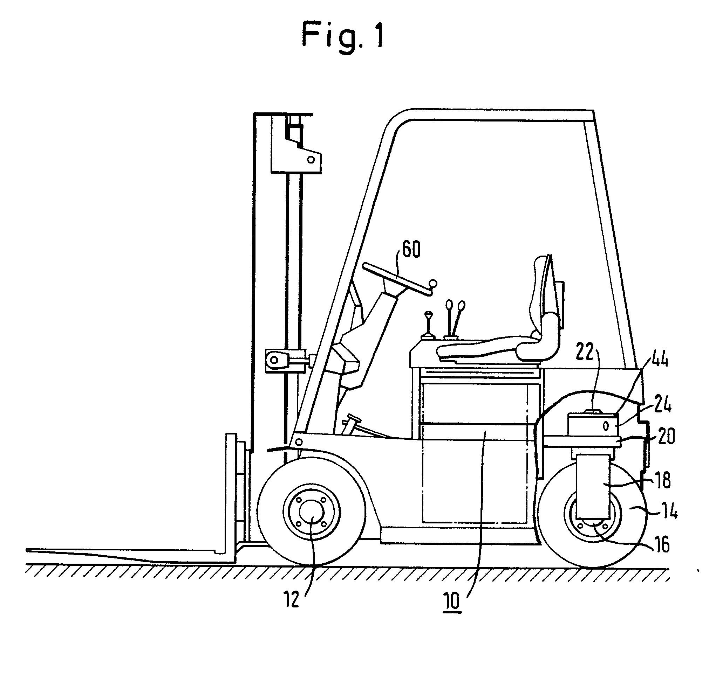

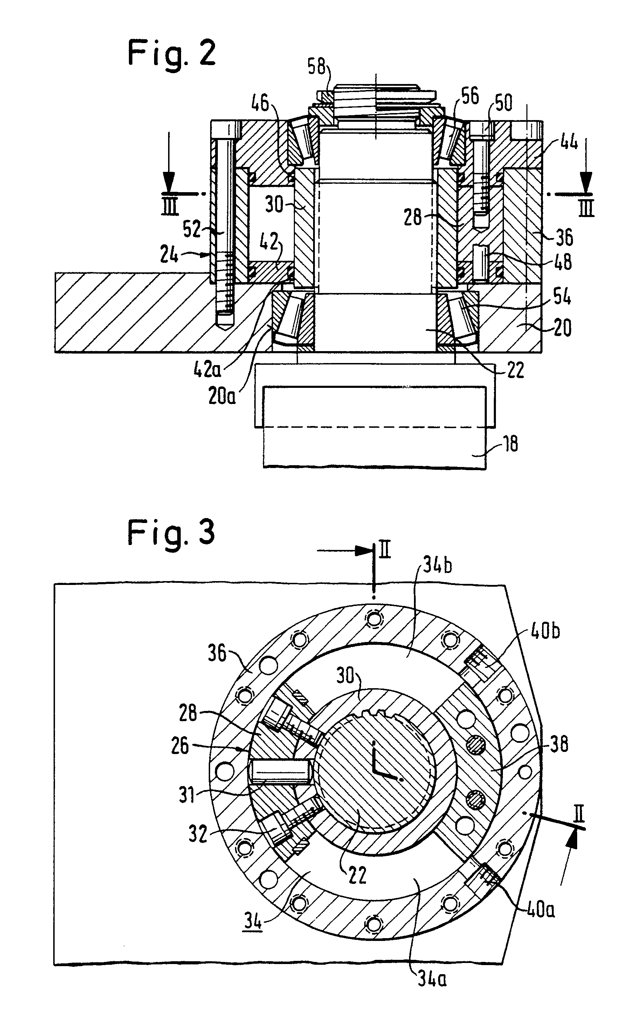

In Fig. 1 ist ein Dreiradstapler 10 mit einer starren, zwei zueinander beabstandete Räder aufweisenden Vorderachse 12 und mit einer mit einem Doppelrad 14 oder Einzelrad versehenen hinteren Lenkachse 16 dargestellt. Die Lenkachse 16 ist in einer Gabel 18 gelagert, die mit einem in der vertikalen Längsmittelebene des Dreiradstaplers 10 verlaufenden und in einer Fahrgestellplatte 20 gelagerten Drehschemelzapfen 22 verbunden ist, mittels dem die Lenkachse 16 gegenüber dem Fahrgestell verschwenkbar ist. Die Fahrgestellplatte 20 weist dabei eine Druchtrittsöffnung 20a für den Drehschemelzapfen 22 auf (vgl. Fig. 2).

Wie aus den Fig. 2 und 3 hervorgeht, ist in einem koaxial zu dem Drehschemelzapfen 22 angeordneten Gehäuse 24 ein Drehkolbenantrieb 26 konzentrisch zu dem Drehschemelzapfen 22 vorgesehen. Der Drehkolbenantrieb 26 weist einen zu einem Rotor gehörigen Segmentkolben 28 auf, der über eine durch eine Verzahnung mit dem Drehschemelzapfen 22 drehfest verbundene Drehbuchse 30 in Drehmomentübertragungsverbindung mit dem Drehschemelzapfen 22 steht. Der Segmentkolben 28, der mittels eines Zentrierstiftes 31 gegenüber der Drehbuchse 30 zentriert und durch Schrauben 32 an der Buchse 30 fest angebracht ist, ist in einem fahrgestellfesten Ringzylinderraum 34 aufgenommen. Der Ringzylinderraum 34 wird radial nach außen durch einen zu einem Stator gehörenden ringförmigen Mantel 36 begrenzt, der Teil des Gehäuses 24 ist. Durch ein statorfestes Segment 38 und den Segmentkolben 28 ist der Ringzylinderraum 34 in zwei Teilringzylinderräume 34a und 34b aufgeteilt (vgl. Fig. 3). Die beiden Teilringzylinderräume 34a, 34b besitzen jeweils einen Hydraulikanschluß 40a,b, über die Hydraulikdruckfluid in die beiden Teilringzylinderräume 34a,34b gelangen bzw. von dort entweichen kann.

Der Ringzylinderraum 34 wird an seiner gabelnahen Seite durch eine eine Durchtrittsöffnung 42a für den Drehschemelzapfen 22 bzw. die Drehbuchse 30 aufweisenden, auf der Fahrgestellplatte 20 auflagernden Bodenplatte 42 und auf seiner gabelfernen Seite durch einen Deckel 44 abgeschlossen, die jeweils mit Dichtungsmitteln 46 versehen sind. Das statorfeste Segment 38 ist über Zentrierstifte 48 gegenüber der Bodenplatte 42 zentriert und über Schrauben 50 mit dem Deckel 44 verschraubt. Der Deckel 44 ist darüber hinaus über weitere Schrauben 52 über den Mantel 36 mit der Fahrgestellplatte 20 verschraubt.

In der Fahrgestellplatte 20 sowie in dem Deckel 44 ist jeweils ein Schrägrollenlager 54,56 einer Stützlagerung in O-Anordnung für den Drehschemelzapfen 22 aufgenommen. Die Stützlagerung 54,56 wird durch eine Wellenmutter 58 vorgespannt, so daß sie spielfrei ist.

Wird das mit den nicht weiter gezeigten hydraulischen Stellelementen des Drehkolbenantriebs 26 in Wirkverbindung stehende Lenkrad 60 (vgl. Fig. 1) aus seiner Stellung für Geradeausfahrt ausgelenkt, so wird je nach Auslenkrichtung in einen der beiden Teilringzylinderräume 34a bzw. 34b über ein Lenksteuerventil und die Hydraulikanschlüsse 40a,40b Hydraulikdruckfluid eingeleitet. Hierdurch wird der Segmentkolben 28 aus seiner Ausgangslage ausgelenkt, wobei er den nicht mit Hydraulikdruckfluid beaufschlagten Teilringzylinderraum 34a,34b volumenmäßig verkleinert, so daß dort befindliches Hydraulikdruckfluid über den jeweiligen Hydraulikanschluß 40a,40b in einen nicht weiter gezeigten Vorratsbehälter fließt. Durch die Bewegung des Schwenkkolbens 28 werden die mit ihm drehfest verbundene Drehbuchse 30 sowie der Drehschemelzapfen 22 aus ihrer Lage für die Geradeausfahrt ausgelenkt, so daß die Gabel 18 zusammen mit der Lenkachse 16 entsprechend der Lenkradbewegung verschwenkt wird. Um die Räder 14 der Lenkachse 16 wieder in ihre Stellung für die Geradeausfahrt zu bringen, wird nach einer entsprechenden Bewegung des Lenkrads 60 derjenige Teilringzylinderraum 34a,34b mit Hydraulikdruckfluid beaufschlagt, dessen Volumen gegenüber dem Volumen des anderen Teilringzylinderraums 34a,34b kleiner ist. Hierdurch gelangt der Segmentkolben 28 wieder in seine Ausgangslage, so daß der Dreiradstapler 10 geradeaus fährt.

Die vorstehend geschilderte Erfindung ist nicht auf einen Dreiradstapler beschränkt, sondern kann auch bei jedem beliebigen anderen Fahrzeug, bei dem Drehschemellenkanordnungen verwendet werden können, eingesetzt werden.

**Patentansprüche**

1. Drehschemellenkanordnung an einem Fahrzeug, insbesondere an einem Dreiradstapler (10) mit einem an einem Fahrgestell schwenkbar gelagerten Drehschemelzapfen (22) und einem an dem Drehschemelzapfen (22) angreifenden hydraulischen Lenkantrieb (26), **dadurch gekennzeichnet,** daß konzentrisch zu dem Drehschemelzapfen (20) ein Drehkolbenantrieb (26) angeordnet ist mit einem fahrgestellfesten Stator (36) und einem auf dem Drehschemelzapfen (22) drehfest angeordneten Rotor (28).

2.   Drehschemellenkanordnung nach Anspruch 1, **dadurch gekennzeichnet,** daß auf dem Drehschemelzapfen (22) ein Segmentkolben (28) angeordnet ist, welcher in einem fahrgestellfesten Ringzylinderraum (34) aufgenommen ist.

3.   Drehschemellenkanordnung nach Anspruch 2, **dadurch gekennzeichnet,** daß der Ringzylinderraum (34) nach radial innen durch eine Drehbuchse (30) abgeschlossen ist, welche dichtend an einem den Ringzylinderraum (34) in axialer Richtung und nach radial außen begrenzenden Gehäuse (24) anliegt, mit dem Drehschemelzapfen (22) drehfest verbunden ist und mit dem Segmentkolben (28) in Mitnahmeverbindung steht.

4.   Drehschemellenkanordnung nach Anspruch 3, **dadurch gekennzeichnet,** daß das Gehäuse (24) durch eine auf einer Fahrgestellplatte (20) mit Durchtrittsöffnung (20a) für den Drehschemelzapfen (22) auflagernden Bodenplatte (42), einem Mantel (36) und einem Deckelteil (44) gebildet ist, welche mit der Fahrgestellplatte (20) verspannt sind.

5.   Drehschemellenkanordnung nach einem der Ansprüche 2 - 4, **dadurch gekennzeichnet,** daß der Ringzylinderraum (34) vorzugsweise ein einziges statorfestes Segment (38) aufnimmt, welches zusammen mit dem Segmentkolben (28) zwei Teilringzylinderräume (34a,34b) begrenzt, die jeweils mit mindestens einem Hydraulikanschluß (40a,b) versehen sind.

6.   Drehschemellenkanordnung nach einem der Ansprüche 1 - 5, **dadurch gekennzeichnet,** daß der Drehschemelzapfen (22) durch ein erstes Lager (54) in dem Fahrgestell, insbesondere der Fahrgestellplatte (20), unterhalb des Stators (36) und durch ein oberes, im Stator (36) aufgenommenes zweites Lager (56) gelagert ist.

7.   Drehschemellenkanordnung nach Anspruch 6, **dadurch gekennzeichnet,** daß das zweite Lager (56) im Deckelteil (44) angeordnet ist.

# Fig. 1

## Fig. 2

## Fig. 3

**Europäisches Patentamt**

# EUROPÄISCHER RECHERCHENBERICHT

Nummer der Anmeldung

## EP 90 12 5736

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X,A | US-A-2 755 625 (ACTON)<br>* Figuren 1, 3 * | 1,5 | B 62 D 7/02<br>B 62 D 5/14 |
| A | DE-A-3 414 579 (LINDE)<br>* das ganze Dokument * | 1,2,5 | |
| A | US-A-3 047 086 (MAYR)<br>* Figuren 1-3 * | 1,5 | |
| A | US-A-2 939 428 (OSTWALD)<br>* Figuren 1, 2 * | 1-4,6,7 | |
| D,A | DE-C-2 406 610 (LINDE)<br>* das ganze Dokument * | 1 | |

| RECHERCHIERTE SACHGEBIETE (Int. Cl.5) |
|---|
| B 62 D |

Der vorliegende Recherchenbericht wurde für alle Patentansprüche erstellt

| Recherchenort | Abschlußdatum der Recherche | Prüfer |
|---|---|---|
| Berlin | 07 Mai 91 | KRIEGER P O |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument